# FASCICULE DE BREVET EUROPEEN

(11) **EP 2 274 578 B1**
(45) Date de publication et mention de la délivrance du brevet: **20.03.2013**
(21) Numéro de dépôt: 09724729.0
(22) Date de dépôt: 27.03.2009
(51) Int. Cl.: H04W 4/02, H04L 29/08, H04L 12/28, G01D 4/00

(54) **PROCÉDÉ ET DISPOSITIF DE DÉLIVRANCE D'UNE ATTESTATION NUMÉRIQUE DE DOMICILE**
VERFAHREN UND EINRICHTUNG ZUM AUSGEBEN EINER DIGITALEN AUFENTHALTSBESCHEINIGUNG
METHOD AND DEVICE FOR ISSUING A DIGITAL RESIDENCE CERTIFICATE

(30) Priorité: 28.03.2008 FR 0852059
(43) Date de publication de la demande: 19.01.2011
(73) Titulaire: Electricité de France, 75008 Paris (FR)
(72) Inventeur: PIETRE-CAMBACEDES, Ludovic, F-75014 Paris (FR); DHERBECOURT, Yves, F-92340 Bourg-La-Reine (FR)
(74) Mandataire: Cabinet Plasseraud
(86) Numéro de dépôt international: PCT/EP2009/053684
(87) Numéro de publication internationale: WO 2009/118416

(56) Documents cités:
- WO-A-2007/047947
- WO-A-2007/132473
- US-A1- 2007 247 331

## Description

La présente invention concerne la délivrance d'une attestation numérique de domicile par un module ancré à son local.

Un local désigne ici à la fois une habitation, ou un local commercial, ou tout autre local dont il peut être besoin d'authentifier la résidence de son propriétaire ou son occupant, ou d'authentifier d'autres informations le concernant.

Un module ancré à son local désigne ici un système, éventuellement réparti, qui est indissociablement lié, ou fixé, au local dans le quel il se trouve. Cette fixation n'est pas sensée être rompue durant l'utilisation normale du module.

Une attestation numérique de domicile désigne ici un moyen d'obtention en toute sécurité, d'informations fiables au sujet du local à partir duquel il est émis.

Une telle attestation de domicile peut être produite pour justifier la domiciliation de la personne qui la fournit. Par exemple, il peut être demandé à un usager d'un service commercial ou administratif de justifier sa domiciliation régulière dans un local. Cette justification peut permettre d'identifier une personne, de prouver son lieu de résidence ou encore de permettre de la retrouver.

Une justification couramment utilisée consiste par exemple en la production de documents de facturation de services qui peuvent être régulièrement rendus et rattachés au local. Ces services peuvent être notamment la fourniture d'énergie électrique ou de gaz, l'accès à un réseau de télécommunications, ou encore la fourniture d'eau courante. Ces services peuvent également être des services de livraison à domicile, ou des services dématérialisés de fourniture de contenu électronique.

La fourniture de ces services permettant une justification de la domiciliation, nécessitent un équipement identifié comme appartenant au local, et qui doit, en fonctionnement normal, être respecté dans son intégrité. De plus, il est préférable que ces équipements soient connectés à des réseaux de communication. Ces équipements peuvent être notamment des compteurs.

Les documents WO 2007/047947, US 2007/0247331 et WO 2007/132473 divulguent des compteurs d'électricité ou de gaz, pour lesquels sont prévus des contrôles de données visant des détections de fraude.

Il n'est pas proposé aujourd'hui d'outil informatique qui permettrait de délivrer sans délai, sur requête, une attestation numérique de domicile.

La présente invention vient améliorer la situation.

La présente invention propose une approche selon laquelle un module délivrant des attestations numériques de domicile est associé à un compteur de consommation, tel que par exemple un compteur de consommation électrique. Dans une réalisation particulière, il est proposé de tirer profit des informations que délivre le compteur pour s'assurer de leur cohérence et, de là, de l'intégrité de l'association module/compteur.

Les compteurs de consommation d'énergie électrique sont disposés de manière fixe, en général dans un local pour lequel ils indiquent l'énergie électrique totale consommée à partir d'un réseau électrique qui alimente le local. Chaque compteur est identifiable de façon unique au moyen de son numéro de série. Le réseau électrique auquel il est adjoint est par nature indissociable du local. Le numéro de série identifie donc, pour peu que le compteur ne soit pas violé et/ou délocalisé, le local dans lequel il se trouve.

Le compteur peut avantageusement présenter une interface communicante via un réseau de communication, lui permettant de délivrer des informations relatives à la consommation d'énergie électrique dans le local dans lequel il se trouve.

Le compteur peut donc envoyer des informations à un module récepteur qui est chargé de les traiter.

La présente invention permet donc de délivrer une attestation numérique de domicile à partir de données liées à un compteur de consommation associé de manière unique et fixe à un local.

L'objet de l'invention est defini dans les revendications indépendantes 1, 7 et 8.

A cet effet, l'invention propose un procédé mis en oeuvre par des ressources informatiques, pour une délivrance conditionnée d'attestation numérique de domicile, ce domicile comporte au moins un compteur de consommation de fluide ou d'électricité qui l'alimente, ce compteur est agencé pour envoyer de façon récurrente des données propres à un état courant du compteur.

Le procédé au sens de l'invention comporte un contrôle continu des données, avec pour chaque nouvel envoi, une lecture des données communiquées par le compteur et un test de cohérence des données lues, et ce, en fonction d'au moins un critère prédéterminé. Suite à la réception d'une requête d'attestation de domicile, le procédé comporte alors une étape visant à prendre une décision de satisfaire ou non la requête, en fonction d'un résultat dudit contrôle continu des données.

Ainsi, il est possible de délivrer une attestation de domicile sur la foi d'informations prises en temps réel, et associées de manière univoque au domicile.

La présente invention peut être utilisée notamment dans le cadre d'une transaction sécurisée requérant une attestation numérique de domicile.

On notera qu'elle permet d'obtenir des informations de manière rapide et fiable concernant le local.

Les ressources informatiques précitées peuvent comprendre des moyens de calcul et également des moyens de stockage de données.

Les informations que peut délivrer le compteur peuvent être évolutives (comme par exemple la consommation) ou non évolutives. On utilisera avantageusement ce type d'information, non évolutives, pour initialiser le contrôle continu.

Ainsi, les moyens de stockage peuvent être utilisés pour stocker des données de référence utilisées pour l'initialisation du contrôle continu.

Avantageusement, les données de référence ainsi que les données envoyées par le compteur comportent au moins des données d'identification du compteur et le critère prédéterminé comporte au moins une vérification d'un identifiant du compteur.

Ainsi, l'identification même du compteur peut être vérifiée en premier lieu pour s'assurer que le module n'a pas été séparé même temporairement, du compteur.

L'identifiant du compteur peut être un code secret.

En complément ou en variante, les données envoyées par le compteur peuvent être évolutives d'un envoi au suivant et le procédé comporte alors une lecture suivie d'un stockage des données d'un premier envoi, ainsi qu'une lecture des données d'un second envoi qui suit le premier envoi en vue d'effectuer le test de cohérence entre les données des premier et second envois. Ces deux étapes sont préférentiellement répétées en fonction de la récurrence des envois du compteur.

Cette réalisation permet avantageusement de s'apercevoir d'une tentative d'atteinte à l'intégrité de l'association module/compteur, notamment dans le cas d'une diminution ponctuelle dans l'évolution de la consommation et/ou d'un saut anormal de la consommation (consommation fortement accrue sur une faible période de temps).

Ainsi, le procédé peut comporter une vérification de croissance cohérente d'une valeur de consommation comprise dans les données envoyées par le compteur, la vérification de la cohérence de données de profil d'utilisateur comprises dans les données envoyées par le compteur, et la vérification de données représentatives de l'état du compteur (état « intégrité assurée » ou état « intégrité violée ») comprises dans les données envoyées par le compteur.

Selon une autre caractéristique optionnelle avantageuse, les données envoyées par le compteur sont envoyées par trames récurrentes et le test de cohérence porte sur la comparaison d'une trame courante à une trame précédente.

Ainsi, en cas d'incohérence dans le format d'une trame, voire en cas de trame erronée, le module peut suspecter une atteinte à l'intégrité de l'association avec le compteur.

Ainsi, le critère prédéterminé peut comporter la vérification d'un format de trames envoyées par le compteur.

Ces différents tests possibles permettent de vérifier que les données émises ne comportent pas d'erreur, ce qui pourrait signifier qu'un tiers malveillant cherche à désassocier le module du compteur de sorte que l'attestation de domicile fournie ne serait plus fondée.

Ainsi, en cas de non satisfaction des tests de cohérence, les éventuelles futures requêtes d'attestation de domicile sont bloquées de manière durable, le blocage ne pouvant être levé que par une autorité extérieure. Un blocage peut toutefois être levé par un utilisateur du module et du compteur en cas de non satisfaction du test de cohérence portant sur le profil d'utilisateur (notamment en cas de changement de profil suite à l'utilisation d'un nouvel appareil électroménager ou autre, par exemple).

Ainsi, lorsqu'une anomalie est détectée, le module ne délivre pas d'attestation. L'état du compteur est préférentiellement vérifié avant toute nouvelle production d'attestation.

La présente invention vise aussi le module de délivrance conditionnelle d'attestation numérique de domicile. Ce module comporte :
- une première interface de communication avec au moins un compteur de fluide ou d'électricité alimentant un domicile, pour recevoir du compteur des données propres à un état du compteur, de façon récurrente,
- une deuxième interface de communication avec au moins une entité requérant une attestation numérique de domicile,
- des moyens de stockage, au moins temporaire, des données d'identification envoyées par le compteur,
- des moyens de traitement pour comparer des données courantes reçues de la première interface, avec des données préalablement stockées par les moyens de stockage pour coopérer, suite à la réception par la deuxième interface d'une requête d'attestation de domicile, avec la deuxième interface pour satisfaire ou non la requête, en fonction de la vérification de cohérence.

Ainsi, le module comporte globalement des moyens pour mettre en oeuvre le procédé décrit plus haut.

La première interface de communication peut être reliée au compteur par une liaison filaire, ou encore par une liaison de courte portée sans fil.

Avantageusement, le module comporte une enveloppe de protection ainsi qu'un dispositif de détection d'ouverture d'enveloppe.

Ainsi, une manipulation non autorisée du module peut être détectée et engendrer un blocage dans la délivrance d'attestations de domicile.

L'invention vise également l'application du procédé au sens de l'invention à une transaction sécurisée requérant une attestation numérique de domicile.

L'invention vise aussi un système de traitement de données pour une transaction sécurisée requérant une attestation numérique de domicile, le système comprenant :
- une entité requérant une attestation numérique de domicile,
- un compteur de fluide ou d'électricité d'un domicile.

Au sens de l'invention, le système comporte en outre un module de délivrance conditionnelle d'attestation numérique de domicile tel que décrit précédemment.

Préférentiellement, le module est intégré au compteur, toute tentative de séparation physique du module et du compteur étant susceptible de générer un blocage du module.

Avantageusement, l'entité requérant une attestation numérique de domicile peut être un serveur distant, relié au module par un réseau étendu, par exemple tel qu'Internet.

L'invention vise également un programme informatique destiné à être stocké dans une mémoire d'un module de délivrance conditionnelle d'attestation numérique de domicile, et comportant alors des instructions pour la mise en oeuvre du procédé au sens de l'invention.

### BREVE DESCRIPTION DES DESSINS

D'autres caractéristiques et avantages de l'invention apparaîtront à l'examen de la description détaillée ci-après, et des dessins annexés sur lesquels :
- la figure 1 illustre un contexte général d'application du procédé selon l'invention,
- la figure 2 illustre les étapes principales du procédé entre la génération de données par le compteur et la délivrance ou non d'une attestation numérique de domicile, dans un exemple de réalisation,
- la figure 3 illustre le format d'une trame de données envoyée par le compteur, dans un exemple de réalisation,
- la figure 4 illustre de manière détaillée un exemple de réalisation du procédé au sens de l'invention, des étapes depuis la génération de données par le compteur jusqu'à la décision de délivrance ou non d'une attestation numérique de domicile
- la figure 5 illustre un module de délivrance d'attestation numérique de domicile selon un mode de réalisation de l'invention.

### DESCRIPTION DETAILLEE DE FORMES DE REALISATION

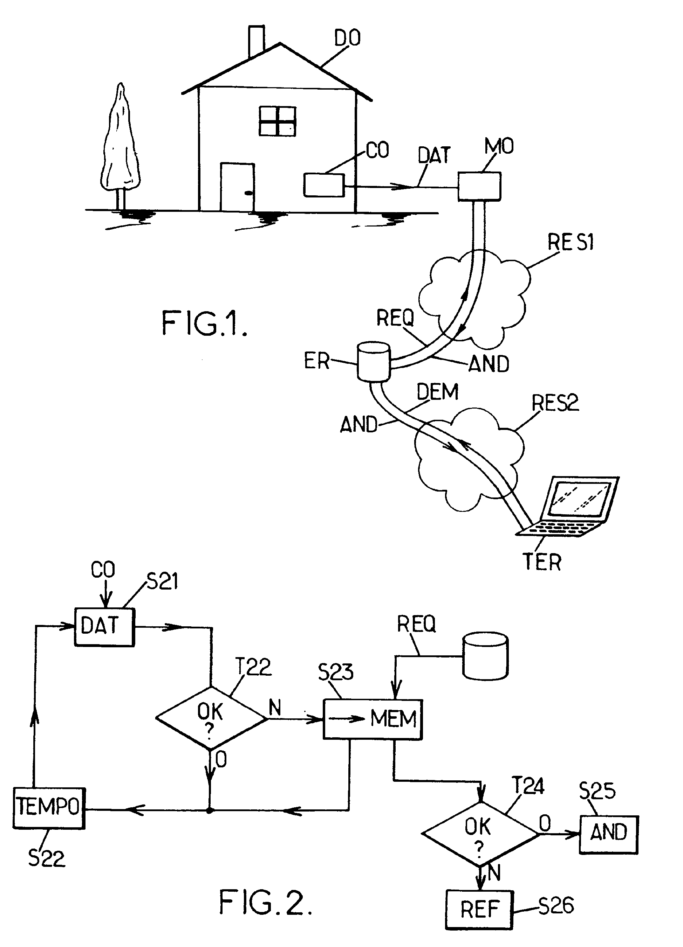

En se référant à la figure 1, un compteur CO est rattaché à un domicile DO. Ce compteur peut être notamment un compteur de consommation d'énergie électrique, de gaz, d'eau, et peut être considéré de manière plus étendue. Le compteur CO est préférentiellement fixé au domicile. Par exemple, il est encastré dans un mur. Cependant, il est possible qu'il soit fixé de manière plus ou mois irréversible. On retiendra que ce compteur doit, de manière sûre, être associé physiquement au domicile. On doit pouvoir être sûr que le compteur se trouve dans l'enceinte du domicile.

Le domicile DO peut être une habitation, un local commercial, ou bien encore des bureaux, ou même un site de production. Tous ces exemples ne limitent pas les domiciles DO entrant dans le cadre de la présente invention.

Un module MO est associé au compteur CO. Le compteur CO étant lui-même rattaché au domicile DO, le module MO est ancré au domicile DO. Ce module est chargé, notamment, de traiter et de mémoriser des informations issues du compteur CO. Ce traitement et cette mémorisation sont appliqués avantageusement ici en vue d'une d'établir une attestation numérique de domicile. Cette attestation numérique de domicile peut être utilisée par une personne pour justifier de l'authenticité de certaines informations, notamment d'une domiciliation dans le domicile DO. Cette attestation numérique de domicile peut être également utilisée par des services ou applications électroniques, ou par des entités informatiques appartenant à un réseau domestique du domicile. Dans ce dernier cas, l'attestation numérique de domicile est échangée entre machines. Le module MO est décrit plus en détails dans la suite.

Le compteur CO communique au module MO des données DAT. Ces données peuvent être de plusieurs natures. Elles peuvent être, de manière non limitative, des données indiquant une consommation mesurée par le compteur, ou encore l'identité du domicilié ou un état du compteur.

Le module MO communique avec une entité requérante ER à travers un réseau de communications RES1. L'entité ER, par exemple un serveur distant, transfère au module MO des requêtes REQ d'attestation numérique de domicile AND, et le module MO établit et délivre notamment à l'entité ER des attestations numériques de domicile AND.

Le réseau RES1 est un réseau étendu, permettant la communication en temps réel d'informations entre différentes unités distantes. Ce réseau étendu peut, par exemple, être Internet.

L'entité ER communique avec un terminal TER à travers un réseau de communications RES2. Ce terminal TER peut être par exemple un poste informatique à disposition d'une autorité administrative, bancaire ou à disposition chez un commerçant pour un paiement, requérant une attestation numérique de domicile. L'entité ER peut alors transmettre notamment au terminal TER des attestations numériques de domicile AND issues du module MO. Le terminal TER, délivre notamment à l'entité ER des demandes DEM d'attestation numérique de domicile.

Le réseau RES2 est un réseau étendu, permettant la communication en temps réel d'informations entre différentes unités distantes. Ce réseau peut être le même que le réseau RES1, ou être un réseau distinct du réseau RES1.

Le terminal TER peut, par exemple, se trouver chez un commerçant chez qui le résidant du domicile DOM effectue un paiement. Afin de sécuriser la transaction, le commerçant peut demander une attestation numérique de domicile AND. Il envoie alors une demande DEM à l'entité ER à travers le réseau RES2.

L'attestation numérique de domicile peut permettre au commerçant de vérifier la correspondance d'informations concernant la domiciliation du résidant figurant, d'une part sur un moyen de paiement présenté par le résidant, et celle indiquée d'autre part par l'attestation numérique de domicile.

L'entité ER est un serveur central, faisant interface entre un module MO se trouvant dans un domicile DO et un terminal TER. L'entité ER, sur réception de la demande DEM du commerçant, se charge de récupérer, auprès du module MO, l'attestation numérique de domicile, et le cas échéant la transmet au commerçant.

L'entité ER permet, par exemple, de partager entre plusieurs modules MO, la capacité de communication avec les terminaux.

Cependant, on pourrait prévoir une réalisation de l'invention où les terminaux communiquent directement avec les modules MO.

Ainsi, le commerçant peut vérifier l'adresse de son client et s'assurer de pouvoir le retrouver.

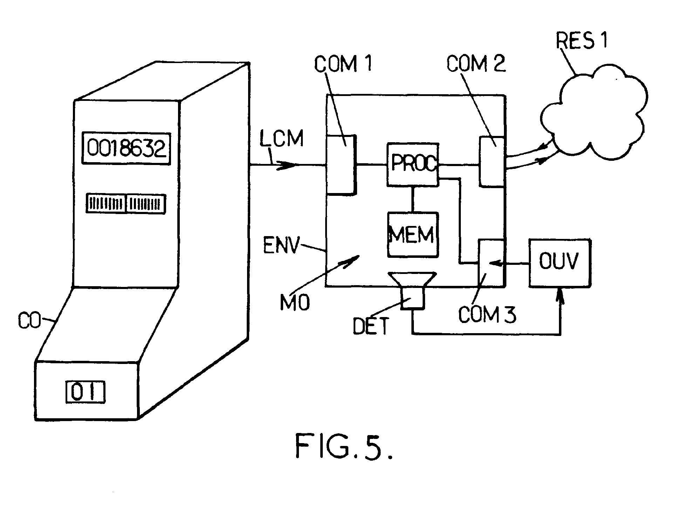

Le module MO est détaillé ici en se référant à la figure 5.

Le module MO est délimité par une enveloppe ENV, et il comporte notamment un ou plusieurs éléments de stockage d'information MEM, un processeur PROC, des interfaces de communication COM1, COM2, COM3, et un détecteur d'ouverture d'enveloppe DET.

Le module MO communique notamment avec le compteur CO, avec des unités distantes à travers le réseau RES1 telles que le serveur CA, et une unité d'alerte d'ouverture d'enveloppe OUV.

En ce qui concerne les éléments de stockage MEM, plusieurs types sont possibles. Il peut s'agir d'éléments de mémoire dite vive, c'est-à-dire que l'information qu'ils contiennent n'est stockée et accessible que lorsque le système est sous tension. On peut citer par exemple les mémoires dites RAM, ou les mémoires dites RWM. Il peut également s'agir d'éléments de mémoire dite morte, c'est-à-dire que l'information qu'ils contiennent est maintenue même lorsque le système n'est plus sous tension. On peut par exemple citer les mémoires de type disque magnétique, ou les mémoires dites flash. Bien entendu, les deux types de mémoire peuvent être réunis au sein du même module MO, chaque type étant utilisé suivant l'information à stocker. Par exemple, les données concernant l'identité du domicilié ne sont modifiées qu'à chaque changement de l'occupant du domicile DO. Cet évènement n'arrivant que peu souvent, ces données pourront être stockées dans une mémoire dite morte. Par exemple encore, lors de la réception d'une trame de données DAT par le module MO, cette trame pourra être stockée dans une mémoire dite vive pour une comparaison avec la trame suivante dans l'ordre d'arrivée. L'utilisation d'un type de mémoire en fonction du type de donnée à stocker apparaîtra naturellement à l'homme du métier.

En ce qui concerne le processeur PROC, il s'agit d'un circuit de traitement d'information permettant de réaliser les opérations qui vont être décrites par la suite. Ce type de circuit peut être de type ASIC ou FPGA, il peut également s'agir d'un microcontrôleur. Le processeur communique avec une mémoire MEM, et est agencé de manière à recevoir de manière directe ou indirecte des informations provenant des interfaces de communication COM1, COM2, COM3.

En ce qui concerne les interfaces de communication COM1, COM2, COM3, chacune est destinée à recevoir et/ou fournir des informations en provenance et/ou à destination de plusieurs éléments extérieurs.

L'interface COM1 est reliée préférentiellement au compteur CO. Elle permet de recevoir notamment des informations concernant un état courant du compteur, une consommation mesurée par le compteur, une identification du compteur, son intégrité ou autres.

L'interface COM1 est reliée au compteur CO par une connexion LCM. Cette connexion peut être une connexion filaire, ou une connexion sans fil de courte portée.

L'interface COM2 est reliée au réseau RES1. Elle permet de recevoir et d'envoyer des informations à des unités distantes, elles aussi reliées au réseau RES1. L'interface COM2 reçoit notamment des requêtes d'attestation numérique de domicile REQ provenant de l'entité distante ER. L'interface COM2 émet notamment des attestations numériques de domicile, à destination de l'entité ER.

L'interface COM3 est reliée à l'unité d'alerte d'ouverture d'enveloppe OUV. L'interface COM3 reçoit des informations concernant l'intégrité physique de l'enveloppe ENV du module MO. Lorsque ces informations indiquent que l'enveloppe est ouverte ou altérée, elles sont prises en compte par le module MO afin de cesser de délivrer des attestations numériques de domicile.

En effet, l'ouverture d'enveloppe peut indiquer une tentative de fraude lorsque cette ouverture n'a pas été opérée par une autorité extérieure, garante de la validité juridique de l'attestation numérique de domicile. Une fraude peut par exemple consister à séparer le module MO du domicile DO auquel il est ancré pour le relier à un autre domicile, cela afin de faussement justifier d'une domiciliation.

Le détecteur d'ouverture d'enveloppe DET est chargé d'indiquer à l'unité d'alerte d'ouverture d'enveloppe, un changement d'état de celle-ci. En fonctionnement normal, l'enveloppe ENV est scellée, et seule l'autorité extérieure peut lever et appliquer le scellé. Toute modification du scellé effectuée par une entité autre que l'autorité, est interprétée comme une tentative de fraude ou un disfonctionnement, et entraîne une suspension de délivrance d'attestation numérique de domicile. Le détecteur DET est, par exemple, sensible à la lumière. Des moyens tels qu'une cellule à photodiode peuvent être prévus. L'enveloppe ENV est totalement opaque à la lumière et l'intérieur du module MO est plongé dans l'obscurité. Lorsque l'enveloppe ENV est ouverte, la lumière extérieure pénètre dans l'enveloppe et est détectée par le détecteur DET. Ce détecteur peut également être un contacteur électrique qui rompt un contact électrique à l'ouverture de l'enveloppe. D'autres types de détecteur sont possibles et peuvent être avantageusement couplés à ceux décrits ici. L'unité d'alerte d'ouverture d'enveloppe peut permettre d'inhiber le signal issu du détecteur lorsque l'autorité extérieure ouvre l'enveloppe ENV, par exemple pour une maintenance par l'autorité extérieure.

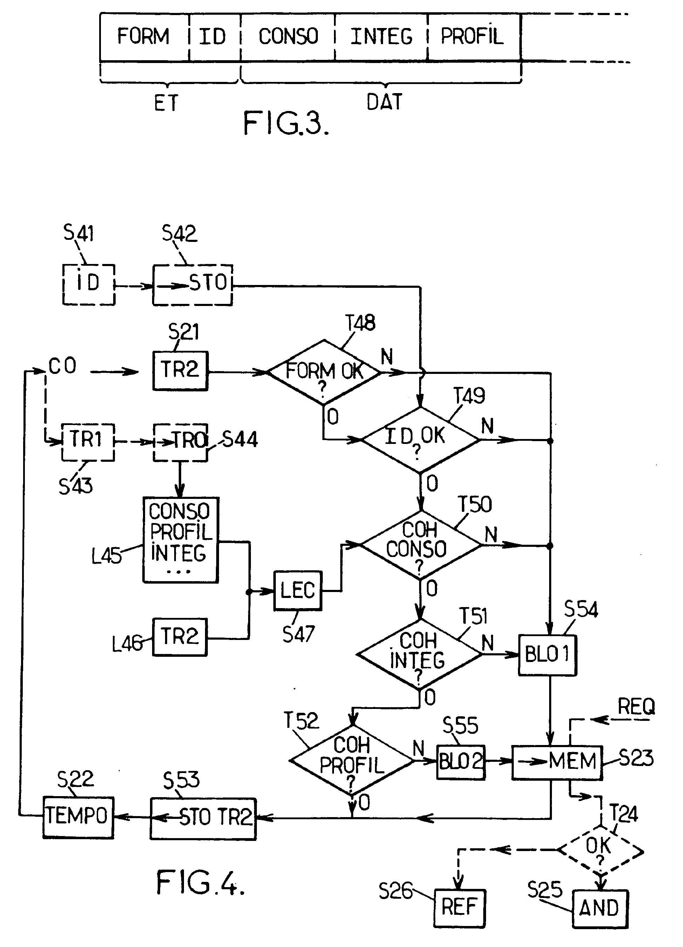

Les données envoyées par le compteur CO au module MO respectent une trame représentée sur la figure 3.

Cette trame comprend un en-tête ET et des données DAT.

L'en-tête ET comprend un champ FORM relatif au format de la trame. Ce champ FORM peut par exemple correspondre à des bits de contrôle dans le codage des informations contenues dans le champ DATA. Par exemple FORM peut être une somme de contrôle (checksum). Le champ ID de l'en-tête ET contient également une identification du compteur CO. Cette identification est notamment utilisée lors d'une phase d'initialisation du module MO.

Le module MO n'est pas initialement lié au compteur CO auquel il va être associé. Lors de l'initialisation du module, celui-ci devra reconnaître un compteur, à qui il sera durablement lié. A sa première mise en marche, le module MO se met à l'écoute de son interface COM1 en attente d'un message d'un compteur auquel il va être lié. Une fois qu'il reçoit une trame, il lit dans l'en-tête le champ ID. A partir de là, le module MO mémorise cette identité de manière durable, et vérifie désormais que tous les messages arrivés par l'interface COM1 ont le même champ ID.

La partie DAT de la trame comprend plusieurs champs, chacun correspondant à une information relative au compteur : la consommation mesurée, l'intégrité du compteur CO, et le profil de l'utilisateur, lequel sera défini plus loin.

Le procédé de délivrance conditionnée d'attestation de domicile est décrit ici en référence à la figure 2.

Le module MO de délivrance d'attestation de domicile DO, reçoit, à l'étape S21, des données provenant du compteur CO.

Les données reçues sont ensuite lues et soumises à un test de cohérence T22. Ce test effectue des vérifications, qui seront détaillées par la suite, en fonction de critères prédéterminés, et stockées de manière durable au sein du module MO.

Lorsque le test T22 est réussi, c'est-à-dire que la trame reçue vérifie un format prédéterminé et que les données DAT contenues dans cette trame satisfont aux critères prédéterminés, les données sont traitées. Par exemple elles sont stockées au sein du module MO en vue d'effectuer des calculs statistiques, d'établir une facture sur la base de la consommation mesurée, ou bien entendu d'établir une attestation numérique de domicile.

Une fois le test terminé, le système entre dans une étape S22 d'attente des prochaines données en provenance du compteur CO.

Lorsque le test T22 échoue, l'information d'échec, et éventuellement plus de détails, est mémorisée au sein du module MO lors d'une étape S23.

La décision de d'établir ou non une attestation numérique de domicile est prise lors d'un test T24 au sein du module MO. Cette décision est prise en fonction des informations issues de tests de cohérence T22. Par exemple, une détection d'enveloppe provoquera un refus.

Lorsque le test T24 est réussi, on génère à l'étape S25 une attestation numérique de domicile AND.

Lorsque le test T24 échoue, on génère à l'étape S26 un refus de délivrance d'attestation numérique de domicile REF.

En se référant à la figure 4, on décrit ici de manière plus précise les différentes vérifications effectuées lors du test de cohérence T22 ainsi que leurs conséquences.

Des données de référence sont générées lors d'une étape S41. Elles sont utilisées lors des différentes vérifications des différents tests. Elles comportent des éléments permettant d'identifier le compteur CO duquel proviennent les données, ainsi que des éléments d'identification propres au domicile DO, et à l'occupant de ce domicile.

Les données de référence comprennent notamment, une identification du compteur CO, un critère d'évolution normale de la consommation CONSO, et un profil d'utilisateur PROFIL.

L'identification du compteur peut consister en son numéro de série. Lors de l'initialisation du module MO, celui-ci est stocké lors d'une étape S42. Par la suite, le module MO peut ainsi reconnaître des informations provenant du compteur, par lecture du champ ID de l'en-tête ET des trames de données.

Le critère d'évolution normale de la consommation est une règle prédéfinie, permettant, en fonction de données courantes de l'évolution de la consommation (comme par exemple des relevés à intervalles de temps réguliers), de savoir si la consommation mesurée par le compteur suit un cours attendu par rapport à des relevés précédents. Par exemple, il ne peut pas être envisagé une consommation inférieure à un relevé précédent. Il ne peut pas être envisagé non plus un saut en consommation brusque et injustifié par rapport à la moyenne de consommation sur les relevés précédents.

Cette règle peut être préétablie de manière arbitraire par l'autorité extérieure ou le fournisseur de service. Elle peut également être établie de manière progressive en tenant compte d'une évolution de la consommation. Ainsi, on peut vérifier que la consommation n'est pas nulle durant plus d'une période déterminée. On peut également vérifier que la consommation ne régresse pas. Une telle constatation signifierait forcément un disfonctionnement ou que le module MO a été ancré à un autre domicile que celui prévu.

Le profil d'utilisateur est une consommation type rattachée à l'occupant du domicile DO. Selon l'occupant, la consommation diffère en quantité et en évolution. Ainsi, il est possible de détecter un changement de consommation et détecter le départ d'un occupant. Par exemple, des profils utilisateur peuvent être : local domestique, bureau, atelier d'industrie ou d'autres profils.

Toutes ces données sont générées de manière ponctuelle, ou progressive lors de l'étape S41, et sont stockées de manière durable lors de l'étape S42.

Lorsqu'une trame de données arrive en provenance du compteur CO à l'étape S21 déjà décrite, elle est lue, et sa forme est vérifiée lors du test T48. Ce test porte sur la forme de la trame de données et vise à vérifier qu'elle comporte les différents champs de données attendus, et que la trame n'est pas corrompue. Cette vérification peut être effectuée au moyen du champ FORM de l'en-tête ET de la trame, comme il apparaîtra à l'homme du métier.

Si le test T48 échoue, on passe à l'étape S54 de blocage durable BLO1. Cette étape est décrite plus en détails dans la suite.

Si 1c test T48 est réussi, on passe au test T49.

Lors du test T49, l'identification du compteur émetteur de la trame est vérifiée. Le champ ID de l'en-tête de la trame est comparé à une valeur prédéterminée à l'étape S41 et stockée à l'étape S42.

Si les deux informations ne sont pas concordantes, on passe à l'étape S54 de blocage durable BLO1 décrite par la suite.

Si les deux informations sont concordantes, alors la trame provient du compteur CO du domicile auquel est ancré le module MO, et on passe au test T50.

Le test T50 vise la cohérence de l'évolution de la consommation CONSO, mesurée par le compteur CO. Ce test compare une trame courante L46, à une trame précédente L45. Cette comparaison est réalisée selon un critère d'évolution normale de la consommation, prédéterminé à l'étape S41 et stocké à l'étape S42.

La trame L45 est émise par le compteur CO et lue lors de l'étape S43. Les vérifications de sa forme et l'identification de l'émetteur peuvent avoir déjà été réalisées. Des informations contenues dans la trame, notamment la consommation CONSO, le profil utilisateur PROFIL, et l'intégrité INTEG du compteur, sont ensuite stockées à l'étape S44 dans une mémoire temporaire.

Lorsque la trame courante L46 arrive, elle est lue, et éventuellement testée quant à sa forme et à l'identification de l'émetteur. Les informations qu'elle contient sont lues et mises en regard des informations stockées lors de l'étape S44 à l'étape S47.

Ces données sont ensuite soumises au test T50.

Lorsque le test échoue, on passe à l'étape S54 de blocage durable BLO1 décrite par la suite.

Si le test réussi, on passe au test T51 de l'intégrité du compteur CO.

Ce test vise à confirmer qu'il n'a pas été effectué de manipulation par autre que l'autorité extérieure. Il est procédé à la vérification des signaux issus de l'unité d'alerte d'ouverture d'enveloppe ENV.

Lorsque le test échoue, on passe à l'étape S54 de blocage durable BLO1 décrite par la suite. Sinon, on passe au test T52 de vérification de cohérence du profil utilisateur.

Ce test vérifie que la consommation mesurée par le compteur CO suit une évolution attendue de la part de l'occupant du domicile par l'autorité extérieure. Ce test utilise des informations d'évolution de la consommation issues de la comparaison des trames courante L46 et précédente L45. Ce test peut faire intervenir des mesures de consommation passées et stockées de manière durable, ainsi qu'une règle de comparaison établie préalablement et stockée de manière durable.

Si le test T52 est réussi, les données de la trame courante sont stockées de manière durable à l'étape S53.

On passe alors à l'étape S22 d'attente de la prochaine trame en provenance du compteur CO.

Sinon, on passe à une étape S55 de blocage durable BLO2 différente de l'étape S54 de blocage durable BLO1.

L'étape S55 bloque la délivrance d'attestation numérique de domicile. Le blocage durable BLO2 de cette étape diffère du blocage durable BLO1 de l'étape S54 en ce qu'il peut être levé par l'utilisateur. En effet, il se peut que de manière brusque la consommation change sans que cela soit lié à un dysfonctionnement ou une fraude. Par exemple, si la consommation chute brusquement durant un certain temps, il se peut que ce soit simplement dû à un départ en vacances. Ainsi, à son retour, l'utilisateur, après s'être authentifié, pourra réactiver le service de génération d'attestation de domicile. Par exemple encore, si la consommation augmente fortement, il se peut que cela soit consécutif à l'installation d'un nouvel appareil électroménager.

Par contre, le blocage durable BLO1 de l'étape S54 ne peut pas être levé par l'utilisateur. Seule l'autorité extérieure peut le faire. Ce blocage est appliqué dans des cas où un doute sur l'incident justifie l'intervention de cette autorité.

Une fois passées les étapes de blocage S54 ou S55, des informations concernant le blocage appliqué sont stockées à l'étape S23, déjà décrite, de manière durable dans une mémoire MEM.

Bien entendu, la présente invention ne se limite pas à la forme de réalisation décrite ci-avant à titre d'exemple ; elle s'étend à d'autres variantes.

Par exemple, la réalisation de certaines étapes décrites peut être effectuée dans un ordre différent. On pourrait réaliser le test d'intégrité T51, avant le test de consommation T50.

De la même manière, le format des trames de données pourrait être différent, et comporter en outre d'autres champs.

D'autres formes de réalisation sont possibles, où la décision T24 de délivrer ou non l'attestation numérique de domicile se prend au sein de l'entité ER. Ainsi, le module MO transmet toutes les informations nécessaires à l'établissement de l'attestation numérique de domicile, et c'est l'entité requérante qui délivre l'attestation en fonction de ces informations.

Bien entendu, on peut envisager un mode réalisation dans lequel l'attestation numérique de domicile est directement établie et délivrée au sein du domicile. Ainsi, on peut envisager une utilisation de la présente invention qui permet à des équipements d'un domicile de prouver à un élément extérieur, leur appartenance au domicile. Par exemple, cela peut permettre de prouver qu'un équipement est utilisé dans le domicile de son propriétaire, et donc éviter toute utilisation de l'équipement en dehors. Comme cela, on peut dissuader de voler l'équipement.

## Revendications

1. Procédé mis en oeuvre par des ressources informatiques auxiliaire 1, d'un module de délivrance conditionnelle d'attestation de domicile, pour une délivrance conditionnée d'attestation numérique de domicile, le domicile (DO) comportant au moins un compteur (CO) de consommation de fluide ou d'électricité alimentant le domicile, procédé dans lequel le compteur envoie de façon récurrente des données (DAT) propres à un état courant du compteur,
tel que le procédé comporte :
- un contrôle continu desdites données, avec, pour chaque nouvel envoi de données, une lecture des données communiquées par ledit compteur et un test de cohérence (T22) des données lues, en fonction d'au moins un critère prédéterminé,
- et, suite à la réception d'une requête d'attestation de domicile (REQ), une prise de décision de satisfaire ou non la requête (T24), en fonction d'un résultat dudit contrôle continu des données,
- le procédé étant tel que, en cas de non satisfaction du test de cohérence (T22), on applique un blocage durable (BLO1) à d'éventuelles futures requêtes d'attestation de domicile (REQ),
le procédé étant tel qu'il comporte un stockage préalable (S42) de données de référence (S41), pour une initialisation du contrôle continu,
le procédé étant tel que les données de référence et les données de chaque envoi comportent au moins des données d'identification (ID) du compteur et ledit critère prédéterminé comporte au moins une vérification (T49) d'un identifiant du compteur, que lesdites données de chaque envoi comportent en outre des données de profil d'utilisateur du compteur,
et le critère prédéterminé comporte en outre une vérification de cohérence du profil d'utilisateur (T52),
que lesdites données de chaque envoi comportent en outre des données de profil d'utilisateur du compteur,
et le critère prédéterminé comporte en outre une vérification de cohérence du profil d'utilisateur (T52),et que le blocage (BLO2) suite à une vérification négative de cohérence du profil peut être levé par l'utilisateur tandis que le blocage (BLO1) suite à une vérification négative d'un identifiant du compteur ne peut être levé que par une autorité extérieure.

2. Procédé selon la revendication 1, **caractérisé en ce que** les données communiquées par le compteur sont évolutives d'un envoi au suivant, et **en ce que** le procédé comporte :
a) une lecture des données d'un premier envoi, suivie d'un stockage (S44) desdites données,
b) une lecture (S47) des données d'un second envoi, qui suit le premier envoi, en vue d'effectuer ledit test de cohérence entre les données des premier et second envois,
et une répétition des étapes a) et b) en fonction de la récurrence des envois des données que communique le compteur.

3. Procédé selon la revendication 2, **caractérisé en ce que** lesdites données comportent au moins une valeur de consommation (CONSO), et **en ce que** le critère prédéterminé comporte une vérification de croissance cohérente de la consommation (T50), d'un envoi au suivant.

4. Procédé selon l'une des revendications 1 à 3, **caractérisé en ce que** lesdites données de chaque envoi comportent en outre des informations d'état représentatives de l'intégrité du compteur,
et **en ce que** le critère prédéterminé comporte en outre une vérification de l'intégrité du compteur (T51).

5. Procédé selon l'une des revendications précédentes, **caractérisé en ce que** les données issues du compteur sont envoyées par trames récurrentes et **en ce que** le test de cohérence porte sur les données (L46) d'une trame courante (TR2), comparées aux données (L45) d'une trame précédente (TR1).

6. Procédé selon la revendication 5, **caractérisé en ce que** le critère prédéterminé comporte en outre une vérification (T48) d'un format de trames émises par le compteur.

7. Module de délivrance conditionnelle d'attestation numérique de domicile,
ledit module comportant des moyens pour la mise en oeuvre de toutes les étapes du procédé selon l'une des revendications précédentes.

8. Programme informatique destiné à être stocké dans une mémoire d'un module (MO) de délivrance conditionnelle d'attestation numérique de domicile, **caractérisé en ce qu'**il comporte des instructions pour la mise en oeuvre de toutes les étapes lorsque ces instructions sont exécutées par ledit module. du procédé selon l'une des revendications 1 à 6.

## Claims

1. Method implemented by means of computer resources of a module for the conditional issue of a digital residence certificate, for conditionally issuing a digital residence certificate, the residence (DO) having at least one meter (CO) measuring the consumption of fluid or electricity supplying the residence, the meter being designed to recurrently send data (DAT) corresponding to a current state of the meter, such that the method comprises::
- continuous monitoring of said data with, for each new transmission of data, a reading of the data sent by said meter and a consistency test (T22) on the data read, on the basis of at least one predetermined criterion,
- and, after receiving a residence certificate request (REQ), a decision is made as to whether or not to fulfil the request (T24), based on a result of said continuous data monitoring,
- the method is such that, in the event of non-fulfilment of the consistency test (T22), a lasting block (BLO1) is applied to any future residence certificate requests (REQ),
- the method is such that it includes prior storage (S42) of reference data (S41) for initialisation of continuous monitoring,
- the method is such that the reference data and the data in each transmission include at least identification data (ID) for the meter and said predetermined criterion includes at least one verification (T49) of a meter identifier,
- the method is such that said data of each transmission further contain meter user profile data,
and the predetermined criterion also contains verification of consistency of the user profile (T52),
- the method is such that, following a negative verification of consistency profile, the block (BL02) can be lifted by the user, whereas, in the event of a negative verification of an meter identifier, the block (BLO1) can only be lifted by an external authority.

2. Method according to claim 1, **characterised in that** the data sent by the meter can change from one transmission to the next and **in that** the method includes:
a) reading of the data in a first transmission, followed by storage (S44) of said data,
b) reading (S47) of the data in a second transmission, which follows the first transmission, with a view to performing said consistency test between the data in the first and second transmissions,
and repetition of steps a) and b) based on the recurrence of transmissions of data sent by the meter.

3. Method according to claim 2, **characterised in that** said data include at least one consumption value (CONSO), and **in that** the predetermined criterion includes verification of a consistent increase in consumption (T50), from one transmission to the next.

4. Method according to any one of claims 1to 3, **characterised in that** said data also comprise status information representative of the integrity of the meter,
and **in that** the predetermined criterion also comprises verification of the integrity of the meter (T51).

5. Method according to any one of the preceding claims, **characterised in that** the data originating from the meter are sent in recurrent frames and **in that** the consistency test relates to the data (L46) in a current frame (TR2) compared with the data (L45) in a preceding frame (TR1).

6. Method according to claim 5, **characterised in that** the predetermined criterion also comprises verification (T48) of a format of frames sent by the meter.

7. Module for conditionally issuing a digital residence certificate, said module comprising means to implement all the steps of the method according to any one of the preceding claims.

8. Computer program intended to be stored in a memory of a module (MO) for the conditional issue of a digital residence certificate, **characterised in that** it includes instructions for the implementation of all the steps, when these instructions are performed by said module, of the method according to any one of claims 1 to 6.

## Patentansprüche

1. Verfahren, das von Informatik-Ressourcen eines Moduls zur bedingten Ausgabe einer digitalen Wohnsitzbescheinigung für eine bedingte Ausgabe einer digitalen Wohnsitzbescheinigung umgesetzt wird, wobei der Wohnsitz (DO) mindestens einen Verbrauchszähler (CO) für Flüssigkeit oder Elektrizität aufweist, mit denen der Wohnsitz versorgt ist, Verfahren, bei dem der Zähler wiederholt Daten (DAT) sendet, die einem aktuellen Zustand des Zählers eigen sind, derart, dass das Verfahren aufweist:
- eine durchgehende Kontrolle der Daten mit, für jede neue Datensendung, einem Ablesen der vom Zähler übermittelten Daten und einem Kohärenztest (T22) der abgelesenen Daten abhängig von mindestens einem vorbestimmten Kriterium,
- und, **nach Empfang einer** Wohnsitzbescheinigungsanforderung (REQ), das Treffen einer Entscheidung, die Anforderung (T24) zu erfüllen oder nicht, abhängig von einem Ergebnis der durchgehenden Kontrolle der Daten,
wobei das Verfahren so ist, dass bei Nichterfüllung des Kohärenztests (T22) eine dauerhafte Blockierung (BLO1) möglicher späterer Wohnsitzbescheinigungsanforderungen (REQ) angewendet wird,
wobei das Verfahren so ist, dass es eine vorhergehende Speicherung (S42) von Bezugsdaten (S41) für eine Initialisierung der durchgehenden Kontrolle aufweist,
wobei das Verfahren so ist, dass die Bezugsdaten und die Daten jeder Sendung mindestens Kennzeichnungsdaten (ID) des Zählers aufweisen, und das vorbestimmte Kriterium mindestens eine Überprüfung (T49) einer Kennung des Zählers aufweist,
wobei das Verfahren so ist, dass die Daten jeder Sendung außerdem Benutzerprofildaten des Zählers aufweisen,
und dass das vorbestimmte Kriterium außerdem eine Kohärenzüberprüfung des Benutzerprofils (T52) aufweist,
und wobei das Verfahren so ist, dass die Blockierung (BL02) nach einer negativen Kohärenzüberprüfung des Profils vom Benutzer aufgehoben werden kann, während die Blockierung (BLO1) nach einer negativen Überprüfung einer Kennung des Zählers nur von einer externen Stelle aufgehoben werden kann.

2. Verfahren nach Anspruch 1, **dadurch gekennzeichnet, dass** die vom Zähler übermittelten Daten sich von einer Sendung zur nächsten weiterentwickeln, und dass das Verfahren aufweist:
a) ein Ablesen der Daten einer ersten Sendung, gefolgt von einer Speicherung (S44) der Daten,
b) ein Ablesen (S47) der Daten einer zweiten Sendung, die auf die erste Sendung folgt, um den Kohärenztest zwischen den Daten der ersten und der zweiten Sendung durchzuführen,
und eine Wiederholung der Schritte a) und b) abhängig von der Wiederkehr der Datensendungen, die der Zähler übermittelt.

3. Verfahren nach Anspruch 2, **dadurch gekennzeichnet, dass** die Daten mindestens einen Verbrauchswert (CONSO) aufweisen, und dass das vorbestimmte Kriterium eine kohärente Überprüfung der Zunahme des Verbrauchs (T50) von einer Sendung zur nächsten aufweist.

4. Verfahren nach einem der Ansprüche 1 bis 3, **dadurch gekennzeichnet, dass** die Daten jeder Sendung außerdem Zustandsinformationen aufweisen, die für die Integrität des Zählers repräsentativ sind,
und dass das vorbestimmte Kriterium außerdem eine Überprüfung der Integrität des Zählers (T51) aufweist.

5. Verfahren nach einem der vorhergehenden Ansprüche, **dadurch gekennzeichnet, dass** die vom Zähler stammenden Daten in wiederholten Rahmen gesendet werden, und dass der Kohärenztest die Daten (L46) eines aktuellen Rahmens (TR2) verglichen mit den Daten (L45) eines vorhergehenden Rahmens (TR1) betrifft.

6. Verfahren nach Anspruch 5, **dadurch gekennzeichnet, dass** das vorbestimmte Kriterium außerdem eine Überprüfung (T48) eines Formats von vom Zähler gesendeten Rahmen aufweist.

7. Modul zur bedingten Ausgabe einer digitalen Wohnsitzbescheinigung,
wobei das Modul Mittel zur Durchführung aller Schritte des Verfahrens nach einem der vorhergehenden Ansprüche aufweist.

8. EDV-Programm, das dazu bestimmt ist, in einem Speicher eines Moduls (MO) zur bedingten Ausgabe einer digitalen Wohnsitzbescheinigung gespeichert zu werden, **dadurch gekennzeichnet, dass** es Anweisungen zur Durchführung aller Schritte des Verfahrens nach einem der Ansprüche 1 bis 6 aufweist, wenn diese Anweisungen von dem Modul ausgeführt werden.
